# NEW EUROPEAN PATENT SPECIFICATION

(11) **EP 2 525 602 B2**
(45) Date of publication and mention of the opposition decision: **09.01.2019**
(45) Mention of the grant of the patent: 08.07.2015
(21) Application number: 10841910.2
(22) Date of filing: 24.05.2010
(51) Int. Cl.: H04W 36/00

(54) **PROCESSING METHODS AND DEVICE FOR HANDING OVER TO CLOSED SUBSCRIBER GROUP CELL**
VERARBEITUNGSVERFAHREN UND VORRICHTUNG ZUR ÜBERGABE AN EINE GESCHLOSSENE TEILNEHMERGRUPPENZELLE
PROCÉDÉS ET DISPOSITIF DE TRAITEMENT ADAPTÉS POUR EXÉCUTER UN TRANSFERT CELLULAIRE À UNE CELLULE D'UN GROUPE FERMÉ D'ABONNÉS

(30) Priority: 11.01.2010 CN 201010004505
(43) Date of publication of application: 21.11.2012
(73) Proprietor: ZTE Corporation, Shenzhen, Guangdong 518057 (CN)
(72) Inventor: WANG, Shengming, Guangdong 518057 (CN)
(74) Representative: Brunner, John Michael Owen
(86) International application number: PCT/CN2010/073144
(87) International publication number: WO 2011/082567

(56) References cited:
- CN-A- 101 296 451
- CN-A- 101 330 738
- CN-A- 101 553 020
- US-A1- 2009 270 092
- 3GPP: "3GPP TR 23.830, V9.0.0 (2009-09), 3rd Generation Partnership Project; Technical Specification Group Services and System Aspects; Architecture aspects of Home NodeB and Home eNodeB (Release 9)", 3GPP TR 23.830 V9.0.0, , vol. 23.830, no. V9.0.0 1 September 2009 (2009-09-01), pages 1-56, XP002612602, Retrieved from the Internet: URL:http://www.3gpp.org/ftp/Specs/archive/ 23_series/23.830/23830-900.zip [retrieved on 2010-12-01]
- ALCATEL-LUCENT: 'HANDLING OF HYBRID CELLS' 3GPP vol. RAN WG3, 15 January 2010, VALENCIA, XP050423929
- ALCATEL-LUCENT: 'OPEN ISSUE FOR LTE AND 3G INBOUND MOBILITY' 3GPP vol. RAN WG3, 15 January 2010, VALENCIA, XP050424068
- ALCATEL-LUCENT: 'HANDLING OF HYBRID CELLS' 3GPP vol. RAN WG3, 15 January 2010, VALENCIA, XP050424069
- SAMSUNG: 'INBOUND MOBILITY TO H(E)NB' 3GPP vol. RAN WG3, 15 January 2010, VALENCIA, XP050424160
- SAMSUNG: 'INBOUND MOBILITY TO HENB' 3GPP vol. RAN WG3, 15 January 2010, VALENCIA, XP050424161
- SAMSUNG: 'INBOUND MOBILITY TO 3G HNB' vol. RAN WG3, 15 January 2010, VALENCIA, XP050424162

## Description

### Field of the Invention

The present invention relates to the communication field, and in particular to a method and apparatus for processing the handover to a Close Subscriber Group (abbreviated as CSG) cell.

### Background of the Invention

With the development of radio communication technology, there gradually appears home nodeB. Home nodeB is a small base station with low power and is deployed in indoor environment such as house, office, etc. The main function of it is to provide higher service rate for the users and reduce the cost needed when using high-rate service, and at the same time make up the defects of the coverage of the existing distributed cellular radio communication system. The home nodeB has the advantages of being cost efficiency, convenient, low power output, plug and play, etc.

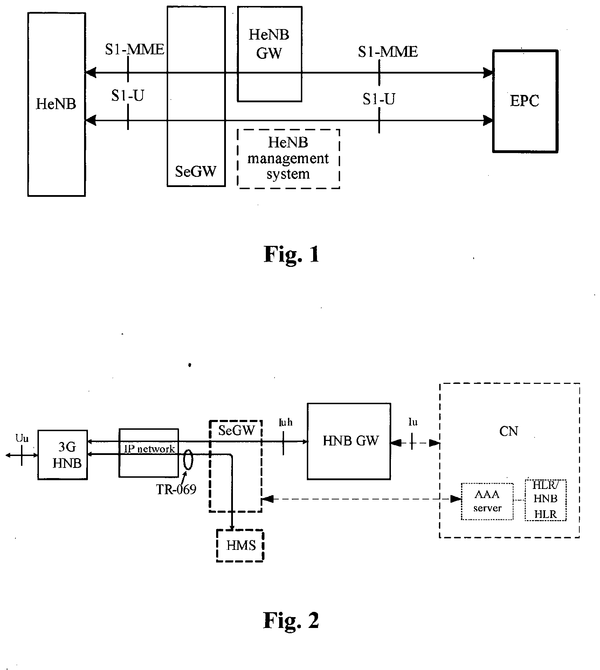

Fig. 1 is a schematic diagram of the network structure of a home (evolved) nodeB (abbreviated as H(e)NB) according to the relevant art. As shown in Fig. 1, a home nodeB user is connected to a core network through a Home (e)NodeB Access Network (abbreviated as H(e)NB AN), wherein the H(e)NB AN is consisted of H(e)NB and Home (e)NodeB Gateway (abbreviated as H(e)NB GW). The H(e)NB GW mainly executes the following functions: verifying the security of home nodeB, processing the registration and access control of home nodeB, and being responsible for exchanging the data of core network and home nodeB. The Home (e)NodeB Management System (abbreviated as H(e)MS) performs maintenance and management on home nodeB, configures and controls home nodeB according to the operators' requirements, and mainly achieves configuration and management function for H(e)NB, including the verification of location information and the parameter configuration of H(e)NB, mainly relating to the parameter configuration of core network (abbreviated as CN) level, parameter configuration of radio access network (abbreviated as RAN) side, and parameter configuration of radio frequency (abbreviated as RF). As to an evolved home nodeB (HeNB) system, the HeNB can be directly connected to a mobile management entity (abbreviated as MME) without through a HeNB GW. The HeNB is in communication with the evolved packet core (abbreviated as EPC) through S1-MME or S1-U, and an intermediate network element can also include a security gateway (abbreviated as SeGW).

Fig. 2 is a schematic diagram of the HNB network structure according to the relevant art. As shown in Fig. 2, a terminal accesses the 3G HNB through a Uu interface, and the 3G HNB is in communication with the HMS through TR-069 via the Internet Protocol (abbreviated as IP) network and SeGW, the 3G HNB is in communication with the HNB GW through an luh interface via the IP network and SeGW, and the HNB GW is in communication with the CN through an lu interface.

With the development of home nodeB technology, CSG is introduced to perform grouping management on the users. The premise of a user belonging to one certain CSG is that the International Mobile Subscriber Identification Number (abbreviated as IMSI) of his terminal equipment has subscribed to this CSG With the introduction of CSG concept, the concept for CSG access mode is introduced to the home nodeB. In this case, there are three kinds of home nodeB access modes of CSG which are respectively Open access mode, Close access mode, and Hybrid access mode. In particular, the home nodeB with the Open access mode allows the access of subscribed and non-subscribed users, and there is no difference from the normal macro cell; the home nodeB with the Close access mode only allows the access of the users who have subscribed to this CSG; and as to the home nodeB with the Hybrid access mode, although it allows the access of subscribed and non-subscribed users simultaneously, the subscribed users are superior to the non-subscribed users regarding resource use, and in the situation that the resources are scarce, the home nodeB serves with priority the subscribed users and may handover the non-subscribed users to other cells or release their signaling connection. In this case, the allowed CSG list of the user equipment (abbreviated as UE) can be used to determine what kind of identity of the UE that accesses the network. The allowed CSG list is an information list of all the CSGs to which the UE subscribes and the list is stored at the network side and in the UE respectively. If the home nodeB that the UE accesses belongs to a CSG that is in the allowed CSG list of the UE, then the UE accesses in an identity of CSG subscribed member, otherwise the UE accesses in an identity of non-CSG subscribed member.

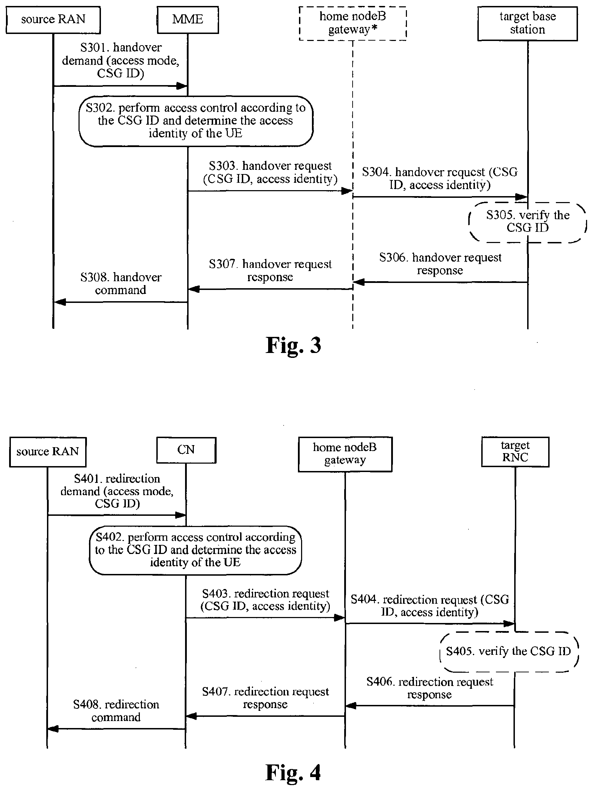

The home nodeB as a radio side base station equipment surely supports the handover function. The handover to a CSG cell or a Hybrid cell is referred to as inbound handover. Fig. 3 is a flow chart of the handover to a Hybrid cell in an LTE system according to the relevant art. As shown in Fig. 3, in a long term evolution (abbreviated as LTE) system, the procedure of the inbound handover to a Hybrid cell includes the following steps.

Step 301: A source radio access network (abbreviated as RAN) decides to initiate the handover to a target Hybrid cell and sends a handover demand message to the MME. The close subscriber group identity (abbreviated as CSG ID) of the target cell is carried in the handover demand message and it is indicated that the access mode of the target cell is Hybrid.

Step 302: The MME determines the access identity of the UE according to the CSG ID in the message after having received the handover demand. Its determination process is: if the CSG ID of the target cell is in the allowed CSG list of the UE, that is, the UE has subscribed to this CSG, then it is deemed that this UE accesses in an identity of CSG member, otherwise accesses in an identity of a non-member.

Steps 303 to 304: The MME sends a handover request message to a target base station after having determined the identity of the UE. Besides the same parameters as in a normal handover request message, this message also carries the CSG ID provided by the source RAN and the access identity information of the UE after the determination of the MME. If the target base station is connected to the MME through a home nodeB gateway, then the handover request message first arrives at a target home nodeB gateway, and then the target home nodeB gateway transfers the handover request message to a target base station. Otherwise, the MME directly sends this handover request message to a target base station. Additionally, the target home nodeB gateway can also authenticate the validity of CSG ID, determine handover failure, and send the handover failure to the MME.

Step 305: The target base station verifies the CSG ID after having received the handover request message, that is, determines whether the CSG ID in this message is the real CSG ID of its own cell, and if yes, then step 306 is performed, otherwise the handover is failed and a handover failure message is sent to the MME.

Step 306: The target base station returns a handover request response to the home nodeB gateway

Step 307: The home nodeB gateway returns the handover request response to the MME.

Step 308: The MME sends a handover command to the source RAN.

The Universal Mobile Telecommunications System (abbreviated as UMTS) has the handover procedure similar to the above but the message name used in the handover process is different. Fig. 4 is a flow chart of handover to a Hybrid cell in the UMTS according to the relevant art, and as shown in Fig. 4, it comprises the following steps.

Step 401: A source RAN decides to initiate the redirection to a target Hybrid cell and sends to a CN a redirection demand message which redirection demand message carries the CSG ID of the target cell and it is indicated that the access mode of the target cell is Hybrid.

Step 402: The CN determines the access identity of the UE according to the CSG ID in the message after having received the redirection demand, through the determination process as follows: if the CSG ID of the target cell is in the allowed CSG list of the UE, that is, the UE has subscribed to this CSG, then it is deemed that this UE accesses in an identity of CSG member, otherwise accesses in an identity of a non-member.

Steps 403 to 404: The CN sends a redirection request message to a target radio network controller (abbreviated as RNC) after having determined the identity of the UE, which message carries the CSG ID provided by the source RAN and the access identity information of the UE after the determination of the CN, besides the same parameters as in a normal redirection request message. If the target RNC is connected to the CN through a home nodeB gateway, then the redirection request message first arrives at a target home nodeB gateway, and then the target home nodeB gateway transfers the redirection request message to a target RNC. Otherwise the CN directly sends this redirection request message to a target RNC. Additionally, the target home nodeB gateway can also authenticate the validity of the CSG ID, determine handover failure, and send the redirection failure to the CN.

Step 405: The target RNC verifies the CSG ID after having received the redirection request message, that is, determines whether the CSG ID in this message is the real CSG ID of its own cell, and if yes, then step 406 is performed, otherwise the redirection is failed and a redirection failure is sent to the CN.

Step 406: The target RNC returns a redirection request response to the home nodeB gateway

Step 407: The home nodeB gateway returns the redirection request response to the CN.

Step 408: The CN returns a redirection command to the source RAN.

As to the above procedure, since the access mode of the target cell is Hybrid, it essentially can accept the access of subscribed users and non-subscribed users, but the subscribed users are superior to the non-subscribed users only regarding the resource usage after the access. However, in the above procedure, in the situation that the CSG verification by the target network element is not passed, it is deemed that the handover is failed. Therefore the handover efficiency is reduced.

3GPP technical report '3GPP TR 23.830, V9.0.0(2009-09)' discloses technical specification group services and system aspects and architecture aspects of Home NodeB and Home eNodeB.

### Summary of the Invention

The main object of the present invention is to provide a method and apparatus for processing the handover to a CSG cell so as to at least solve the above problems.

A method for processing the handover to a close subscriber group cell according to one aspect of the present invention is defined in claim 1.

Preferably, after the target network element has returned a response message with the CSG ID of the target network element to a superior network element of the target network element, the above method further comprises: the superior network element receiving the response message carrying the CSG ID, and the superior network element sending a handover command/redirection command/handover preparation failure message/redirection preparation failure message to a source handover network element, which carries the CSG ID therein.

Preferably, after the superior network element sending a handover command/redirection command/handover preparation failure message/redirection preparation failure message to a source handover network element, the above method further comprises: the source handover network element receiving the handover/redirection command/handover preparation failure message/redirection preparation failure message carrying the CSG ID and updating the information of the target network element according to the CSG ID.

Preferably, as to a long term evolution (LTE) system, the target network element is a target base station or a target home nodeB gateway, and as to universal mobile telecommunications system (UMTS), the target network element is a target radio network controller (RNC) or a target home nodeB gateway.

Preferably, when the target network element is a target base station, the superior network element includes one of: a mobile management entity MME and a home nodeB gateway; and when the target network element is a target RNC, the superior network element includes one of: a core network (CN) and a home nodeB gateway.

Preferably, when the superior network element is a home nodeB gateway, after the superior network element has received the response message carrying the CSG ID, the above method further comprises: the home nodeB gateway sending a response message to the MME or CN.

Preferably, after the superior network element has received a response message carrying the CSG ID, the above method further comprises: the MME or CN receiving the response message and sending a handover command/redirection command/handover preparation failure message/redirection preparation failure message carrying the CSG ID to a source handover network element.

Preferably, as to the LTE system, the handover message is handover request message and the response message is handover request response message/handover preparation failure message; and as to the UMTS system, the handover message is redirection request message and the response message is redirection request response message/redirection preparation failure message.

Preferably, after the target network element has returned a response message with the CSG ID of the target network element to a superior network element, the above method further comprises one of: the MME receiving a handover request response message carrying the CSG ID, determining the real access identity of the user equipment corresponding to the handover message according to the CSG ID and informing the target base station of the determination results; or the CN receiving a redirection request response message carrying the CSG ID, determining the real access identity of the user equipment according to the CSG ID and informing a target RNC of the determination results.

A method for processing the handoverto a close subscriber group cell according to one aspect of the present invention is defined in claim 9.

An apparatus for processing the handover to a close subscriber group cell according to another aspect of the present invention is defined in claim 10.

Preferably, the apparatus further comprises: a processing module for allowing user equipment corresponding to the handover message to access in an iden-tity of a non-member or with an identity of a member in the situation that the verification result of the verifying module is negative.

By virtue of the present invention, after a target network element has received a handover message, if the verification of the CSG ID in this message is not passed, then a response message with its own CSG ID is returned to its superior network element, which solves the problems in the relevant art that the handover is failed because the verification that the target network element performs on the CSG of the non-subscribed users is not passed in the Hybrid access mode, thus improving handover efficiency and system performance.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the network structure of the HeNB according to the relevant art;
Fig. 2 is a schematic diagram of the networkstructure of the HNB according to the relevant art;
Fig. 3 is a flow chart of the handover to a Hybrid cell in the LTE system according to the relevant art;
Fig. 4 is a flow chart of the handover to a Hybrid cell in the UMTS system according to the relevant art;
Fig. 5 is a flow chart of a method for processing the handover to a CSG cell according to the embodiment of the present invention;
Fig. 6 is a flow chart of the improved handover to a Hybrid cell in the LTE system according to Embodiment 1 of the present invention;
Fig. 7 is a flow chart of the improved handover to a Hybrid cell in the UMTS system according to Embodiment 2 of the present invention;
Fig. 8 is a flow chart of the improved handover to a Close cell in the UMTS system according to Embodiment 3 of the present invention;
Fig. 9 is a flow chart of the improved handover to a Close cell in the LTE system according to Embodiment 4 of the present invention;
Fig. 10 is a flow chart of the handover in the situation that a target base station is directly connected to the MME according to Embodiment 5 of the present invention;
Fig. 11 is a block diagram of the structure of an apparatus for processing the handover to a CSG cell according to the embodiment of the present invention; and
Fig. 12 is a block diagram of the structure of the apparatus for processing the handover to a CSG cell according to the preferred embodiment of the present invention.

### Detailed Description of Embodiments

The present invention will now be described in detail with reference to the drawings and in conjunction with embodiments in the following. It needs to be noted that the embodiments of the present application and the features of the embodiments can be combined with each other in the situation of no conflict.

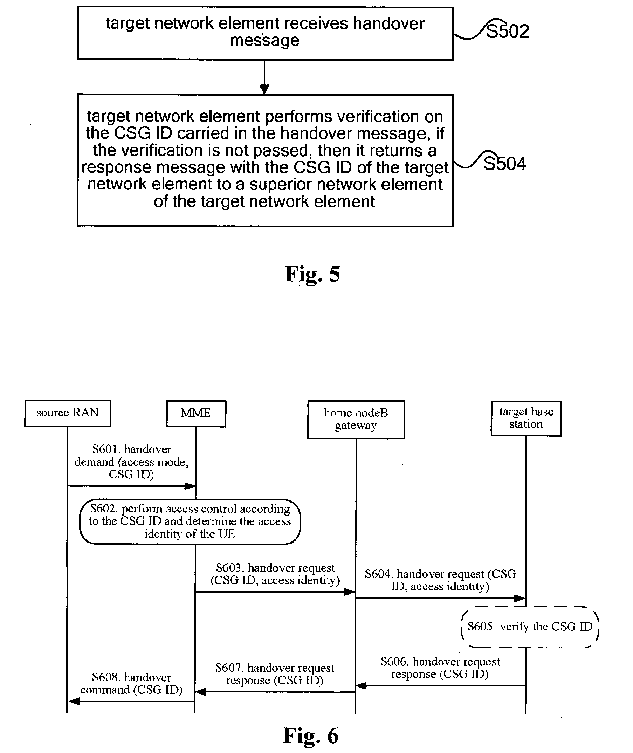

A method for processing the handover to a CSG cell is provided according to the embodiments of the present invention, which method can be applied in the handover process to a Hybrid cell. Fig. 5 is a flow chart of a method for processing the handover to a CSG cell according to the embodiment of the present invention, and as shown in Fig. 5, the method comprises:
Step 502: A target network element receives a handover message;
Step 504: The target network element performs verification on the close subscriber group identity CSG ID carried in the handover message, if the verification is not passed, then it returns a response message with the CSG ID of the target network element to a superior network element of the target network element. The above verification means determining whether the CSG ID obtained from the handover message is identical to the real CSG ID stored in the target network element.

By virtue of the embodiment of the present invention, after a target network element has received a handover message, if the verification of the CSG ID in this message is not passed, then a response message with the own CSG ID of the target network element is returned to the superior network element of the target network element, which solves the problems in the relevant art that the handover is failed because the verification that the target network element performs on the CSG of the non-subscribed users is not passed in the Hybrid access mode, thus improving handover efficiency and system performance.

Preferably, when the access mode of the target network element is Hybrid, if the verification is not passed, then the target network element may allow the UE corresponding to the handover message to access in an identity of a non-member or an identity of a member, and the target network element transfers the default access identity information of the target network elementtoa superior network element This method allows the users, the CSG verification of which are not passed, to be able to access a target cell in the default identity, which avoids the problem that the handover is failed because the CSG verification of the non-subscribed users is not passed, thus improving system performance.

After step 504, the superior network element receives the response message carrying the CSG ID and the superior network element sends a handover command/redirection command/handover preparation failure message/redirection preparation failure message to a source handover network element. Preferably, it carries the CSG ID therein, and the source handover network element receives the handover command/redirection command/handover preparation failure message/redirection preparation failure message carrying the CSG ID and updates the information of the target network element (i.e. the information of target cell) according to the CSG ID.

During the particular implementation process, as to the LTE system, the target network element is a target base station or a target home nodeB gateway, and as to UMTS, the target network element is a target radio network controller RNC or a target home nodeB gateway.

When the target network element is a target base station, the superior network element includes one of: an MME and a home nodeB gateway; and when target network element is a target RNC, the superior network element includes one of: a CN and a home nodeB gateway.

That is to say, as to the superior network element, if the target base station is connected to the MME, then it means the MME; if the target base station is connected to the CN, then it means the CN; if the target base station is connected to the MME or CN through a home nodeB gateway, then the superior network element means home nodeB gateway and the home nodeB gateway forwards the response message to the MME or CN.

When the superior network element is home nodeB gateway, the home nodeB gateway receives the response message carrying the CSG ID and the home nodeB gateway sends the response message to the MME or CN.

The MME or CN receives the response message and sends to a source handover network element a handover command/redirection command/handover preparation failure message/redirection preparation failure message carrying the CSG ID, wherein the MME and CN can receive a response message from the home nodeB gateway and can also receive a response message from the home nodeB.

As to the LTE system, the handover message is the handover request message and the response message is the handover request response message/handover preparation failure message; and as to the UMTS system, the handover message is the redirection request message and the response message is the redirection request response message/redirection preparation failure message.

Preferably, the MME receives the handover request response message carrying the CSG ID, determines the real access identity of the UE corresponding to the handover message according to the CSG ID, and informs the target base station of the determination result.

Preferably, the CN receives the redirection request response message carrying the CSG ID, determines the real access identity of the UE according to the CSG ID, and informs the target RNC of the determination result.

In the above preferred embodiments, there are different network elements corresponding to different processing messages in the LTE system and UMTS system, which better fits the actual situation of the network. The implementation is simple and the operability is good.

For example, the real identity information can be the information that the terminal has a member identity or a non-member identity after the determination of the MME or CN according to the CSG ID in the handover request response message/redirection request response message.

During the particular implementation process, the target side being informed of the real access identity information can mean: informing in the situation that the default identity information is different from the real identity information wherein if the default identity information is non-member identity information, then the real identity information means member identity information; and if the default identity information is member identity information, then the real identity information means non-member identity information.

A method for processing the handover to a close subscriber group cell is further provided according to the embodiment of the present invention, which method comprises: an MME receiving a handover demand message; and the MME performing verification on the CSG ID carried in the handover demand message, wherein if the verification is not passed, then the CSG ID of the target network element is returned to a source handover network element.

The embodiments of the present invention can solve the problems in the related art that the handover is failed because the verification that the target network element performs on the CSG of the non-subscribed user is not passed in the Hybrid access mode, thus improving handover efficiency

Preferably, when the target network element has the Close access mode, in the situation that the verification is not passed, the MME sends a handover preparation failure message to the source handover network element, which message carries the CSG ID of the target network element therein.

Preferably, when the target network element has the Hybrid access mode, in the situation that the verification is not passed, the terminal identity is determined according to the local CSG ID and the target base station is informed of the determined identity information.

Preferably, when the target network element has the Hybrid access mode, in the situation that the verification is not passed, the MME sends a handover command message to the source handover network element, which message carries the CSG ID of the target network element therein.

It has to be noted that the close subscriber group cell described in the embodiments of the present invention not only includes the cell of the Close access mode and also includes those cells of the Hybrid and Open access modes.

Hereinafter, the situation of the handover to a Hybrid cell in the LTE and UMTS systems will be described respectively.

### Embodiment 1:

This embodiment describes the processing in the situation that the detection that the target side performs on the CSG ID provided by the source side is failed during the handover to a Hybrid cell in the LTE system. Fig. 6 is a flow chart of the improved handover to a Hybrid cell in the LTE system according to Embodiment 1 of the present invention. As shown in Fig. 6, the handover flow includes the following steps.

Step 601: A source RAN decides to initiate the handover and sends a handover demand message to a target base station. This message contains the CSG ID of a target cell, and when the access mode of the target cell is Hybrid, this message further indicates that the access mode of the target cell is Hybrid.

Step 602: The MME determines the access identity of the UE according to the CSG ID carried in the message after having received the handover demand message. The determination basis is that if the subscription information of the UE contains this CSG ID, then the UE accesses in an identity of a member, otherwise the UE accesses in an identity of a non-member.

Steps 603 to 604: The MME sends a handover request message to a target base station after the determination is completed, which message carries the CSG ID provided by the source side and the access identity information of the UE after the determination of the MME.

Steps 605 to 606: The target base station determines whether the CSG ID carried in this message is identical to the CSG ID of the target cell after having received the handover request message. If yes, it goes to step 607. If the CSG ID carried in the handover request message is not identical to the CSG ID of the target base station, the Hybrid cell will process the UE as a non-member user or a member user, and then it goes to step 607.

Step 607: If the CSG ID carried in the handover request message is identical to the CSG ID of the target cell, then the target base station returns a handover request response message to the MME. If the CSG ID carried in the handover request message is not identical to the CSG ID of the target base station, then the target base station will process the UE as a non-member user or a member user, and the target base station returns a handover request response to the MME, which handover request response carries the real CSG ID of the target cell and optionally includes the default access identity information of the terminal of the target cell.

Step 608: The MME sends a handover command message to a source base station after having received the handover request response message, which handover demand message optionally includes the CSG ID information contained in the handover response message, and informs the source base station that the target base station is ready for resource handover. The handover preparation work is done through this procedure. The source RAN can update the information of the target cell according to the CSG ID information in the handover command message.

Additionally, the MME can re-determine the real access identity of the UE after having received the handover request response message with the CSG ID. The real access identity of the UE is transferred to the target base station in the situation that the access identity information changes. The method which can be used includes: sending an UE context updating request message to a target base station, which message informs the target base station of the new access identity information of the UE, or a System Architecture Evolution (abbreviated as SAE) bearer establishment request message or a newly added message informs the target base station of the access identity information of the UE.

### Embodiment 2:

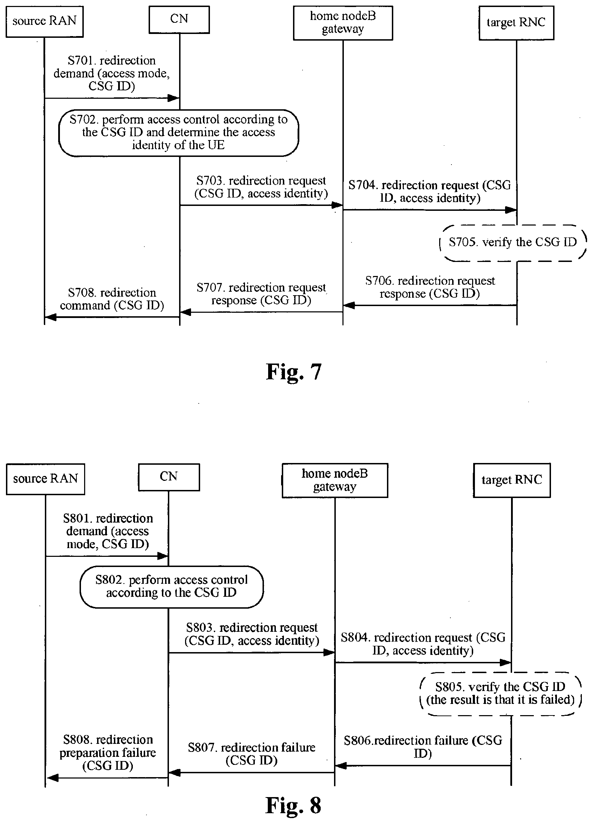

This embodiment describes the processing in the situation that the detection that the target side performs on the CSG ID provided by the source side is failed during the redirection to a Hybrid cell in the UMTS system. Fig. 7 is a flow chart of the improved handover to a Hybrid cell in the UMTS system according to Embodiment 2 of the present invention. As shown in Fig. 7, the redirection flow includes the following steps.

Step 701: A source RAN decides to initiate the redirection and sends a redirection demand message to a target base station. This message contains the CSG ID of a target cell, and when the access mode of the target cell is Hybrid, this message further indicates that the access mode of the target cell is Hybrid.

Step 702: The CN determines the access identity of the UE according to the CSG ID carried in this message after having received the redirection demand message. The determination basis is that if the subscription information of the UE contains this CSG ID, then the UE accesses in an identity of a member, otherwise the UE accesses in an identity of a non-member.

Steps 703 to 704: The CN sends a redirection request message to a target base station after the determination is completed, which message carries the CSG ID provided by the source side and the access identity of the UE after the determination of the CN. As to the situation that the core network is connected through a home nodeB gateway, the home nodeB gateway is responsible for forwarding this redirection request message to the target base station. The home nodeB gateway processes nothing in the situation that the detection on the CSG ID is failed.

Steps 705 to 706: The target base station determines whether the CSG ID carried in this message is identical to the CSG ID of the target base station after having received the redirection request. If yes, then it goes to step 707. If the CSG ID carried in the redirection request message is not identical to the CSG ID of the target cell, the Hybrid cell will process the UE based on an identity of a non-member or an identity a member, and then it goes to step 707.

Step 707: If the CSG ID carried in the redirection request message is identical to the CSG ID of the target cell, then the target base station returns a redirection request response message to the CN. If the CSG ID carried in the redirection request message is not identical to the CSG ID of the target cell, the Hybrid cell will process the UE as a non-member user or a member user. In this case, the target base station returns a redirection request response message to the CN, which redirection request response carries the real CSG ID of the target cell and optionally includes the default access identity information of the terminal of the target cell.

Step 708: The CN sends a redirection command to a source base station after having received the redirection request response message, which redirection command optionally includes the CSG ID information contained in the redirection response message, and informs the source base station that the target base station has been ready for resource redirection. The source RAN can update the information of the target cell according to the CSG ID information in the redirection command message.

Additionally, the CN can re-determine the real access identity of the UE after having received the redirection request response with the CSG ID. The real access identity of the UE is transferred to the target base station in the situation that the access identity information changes. The method which can be used includes: sending a Common ID message to a target base station, which message informs the target base station of the new access identity information of the UE, or a Radio Access Bearer (abbreviated as RAB) assignment request message or a newly added message informs the target base station of the access identity information of the UE.

It has to be noted that the above new access identity information of the UE means the access identity of a terminal which is determined through the CSG ID carried by this message after the core network has received a handover request response/redirection request response message. That is, it indicates whether the UE has subscribed to this CSG ID.

### Embodiment 3:

This embodiment describes the process in the situation that the handover to a CSG cell of the Close access mode is failed. It is different from the Hybrid scenario. Under this scenario, the terminal redirection preparation process is failed, but it is advantageous to construct a neighborhood list of an updated cell by feeding back the CSG information of the target to a source handover network element.

Fig. 8 is a flow chart of the improved handover to a Close cell in the UMTS system according to Embodiment 3 of the present invention. As shown in Fig. 8, the procedure includes the following steps.

Step 801: A source RAN decides to initiate the redirection and sends a redirection demand message to a target base station. This message includes the CSG ID of the target cell.

Step 802: After having received the redirection demand message, the CN performs access control on the UE according to the CSG ID carried in this message and it goes to step 803 after the access control is successful.

Steps 803 to 804: The CN sends a redirection request message to a target base station after the determination is completed, in which the message carries the CSG ID provided by the source side therein. As to the situation that the core network is connected through a home nodeB gateway the home nodeB gateway optionally performs verification on the CSG ID. If the verification is failed, then a redirection failure message is sent to the CN, and the message carries the real CSG information of the target cell, including the CSG ID, the access mode of the cell, or any combination thereof. If the home nodeB gateway does not perform CSG ID verification, then it would transmit the redirection request message to the target base station transparently.

Steps 805 to 806: The target base station determines whether the CSG ID carried in this message is identical to its own CSG ID after having received the redirection request. If yes, then it proceeds to step 807. If the CSG ID carried in the redirection request message is not identical to the CSG ID of the target cell, then it proceeds to step 807.

Step 807: If the verification is passed, then the following is the same as normal redirection procedure. Otherwise, the target base station returns a redirection failure message to the CN and the redirection request response failure carries the real CSG ID of the target cell.

Step 808: The CN sends the redirection preparation failure message to the source base station after having received the redirection failure message, which redirection preparation failure message optionally includes the CSG ID information contained in the redirection preparation failure message. The source RAN can update the information of the target cell according to the CSG ID information in the redirection preparation failure message.

### Embodiment 4:

This embodiment describes the process in the situation that the handover to a CSG cell with the Close access mode is failed. It is different from the Hybrid scenario. Under this scenario, the terminal handover preparation process is failed, but it is advantageous to construct a neighborhood list of an updated cell by feeding back the CSG information of the target cell to a source handover network element.

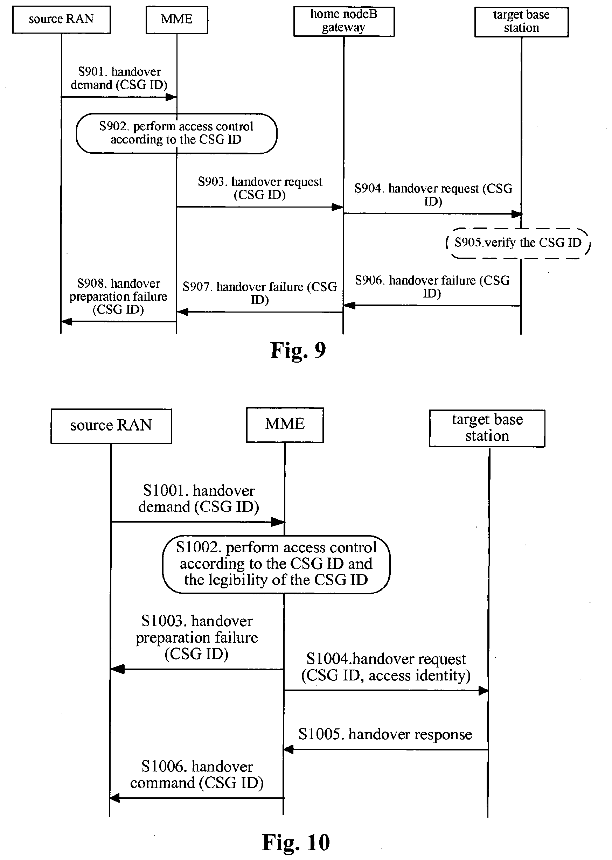

Fig. 9 is a flow chart of the improved handover to a Close cell in the LTE system according to Embodiment 4 of the present invention. As shown in Fig. 9, the procedure includes the following steps.

Step 901: A source RAN decides to initiate the redirection and sends a handover demand message to a target base station. This message includes the CSG ID of the target cell.

Step 902: After having received the handover demand message, the MME performs access control on the UE according to the CSG ID carried in this message, and it proceeds to step 903 after the access control is successful.

Steps 903 to 904: The MME sends the handover request message to a target base station after the determination is completed, in which the message carries the CSG ID provided by the source side. As to the situation that the core network is connected through a home nodeB gateway the home nodeB gateway optionally performs verification on the CSG ID. If the verification is failed, then a handover failure message is sent to the MME, carrying the real CSG information of the target cell, which includes the CSG ID, the access mode of the cell, or any combination thereof. If the home nodeB gateway does not perform CSG ID verification, then it would transmit the handover request message to the target base station transparently.

Steps 905 to 906: The target base station determines whether the CSG ID carried in this message is identical to its own CSG ID after having received the handover request. If yes, then it proceeds to step 907. If the CSG ID carried in the handover request message is not identical to the CSG ID of the target cell, then it proceeds to step 907.

Step 907: If the verification is passed, then the following is the same as the normal handover procedure. Otherwise, the target base station returns a handover failure message to the CN and the handover failure carries the real CSG ID of the target cell.

Step 908: The MME sends a handover preparation failure message to the source base station after having received the handover failure message, in which the handover preparation failure message optionally includes the CSG ID information contained in the handover preparation failure message. The source RAN can update the information of the target cell according to the CSG ID information in the handover preparation failure message.

### Embodiment 5:

This embodiment describes the process in the situation that the CSG verification is failed when the target base station is directly connected to the MME. Fig. 10 is a flow chart of the handover in the situation that a target base station is directly connected to the MME according to Embodiment 5 of the present invention. As shown in Fig. 10, the process procedure for the failure situation will now be described hereinafter.

Step 1001: A source RAN decides to initiate the redirection and sends a handover demand message to a target base station. This message includes the CSG ID of the target cell.

Step 1002: After the MME has received the handover demand message, if the CSG information of the target cell is kept locally, then the MME performs verification on the CSG ID in the handover demand message. Its verification process is to determine whether the CSG ID provided in the handover demand is identical to the CSG ID of the target cell kept by the MME. If yes, then the verification is passed. Otherwise it is deemed that the verification is failed. It proceeds to step 1003 in the situation that the verification is failed.

Step 1003: If the access mode of the target cell is Close, then the MME sends a handover preparation failure message to a source base station, in which the handover preparation failure message optionally includes the CSG ID information contained in the handover failure message, and the handover failure procedure is completed. If the access mode of the target cell is Hybrid, then the MME performs identity determination on the UE according to the saved CSG ID, sends a handover request message to the target base station, and informs the target side of the access identity of the terminal. It proceeds to step 1004.

Steps 1004 to 1006: The target base station sends a handover response message to the MME after having received the handover request message of the MME. The MME sends a handover command to a source network element after having received this message, in which the command carries the CSG ID of the target base station.

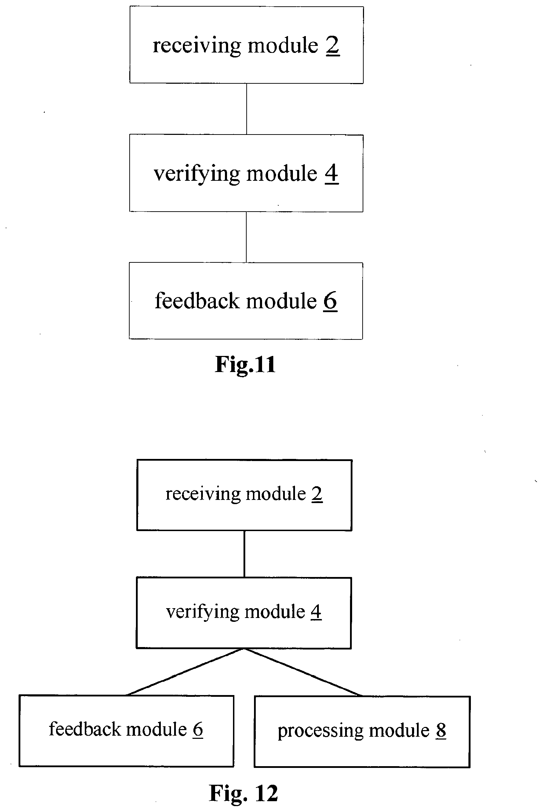

An apparatus for processing the handover to a CSG cell is provided according to the embodiments of the present invention, which apparatus can be used to achieve the above method for processing the handover to a CSG cell. Fig. 11 is a block diagram of the structure of an apparatus for processing the handover to a CSG cell according to the embodiment of the present invention. As shown in Fig. 11, this apparatus comprises: a receiving module **2,** a verifying module **4,** and a feedback module **6,** and the above structure will now be described hereinafter.

The receiving module **2** is configured for receiving a handover message; the verifying module **4** coupled to the receiving module **2** is configured for performing verification on the CSG ID carried in the handover message; and the feedback module **6** coupled to the verifying module **4** is configured for returning a response message with the CSG ID of the target network element to a superior network element of the target network element in the situation that the verification result of the verifying module **4** is negative.

By virtue of the embodiments of the present invention, after the receiving module **2** has received a handover message, the feedback module **6** returns a response message with the CSG ID of the target element to the superior network element of the target element in the situation that the verification that the verifying module 4 performs on the CSG ID in this message is not passed. It solves the problem in the relevant art that the handover is failed because the verification that the target network element performs on the CSG of the non-subscribed users is not passed in the Hybrid access mode, thus improving handover efficiency and system performance.

Fig. 12 is a block diagram of the structure of the apparatus for processing the handover to a CSG cell according to the preferred embodiment of the present invention, which apparatus further comprises: a processing module **8** configured for allowing the user equipment corresponding to the handover message to access in an identity of a non-member or an identity of a member in the situation that the verification result of the verifying module 4 is negative. And optionally, the default access identity information of the target network element is transferred to the superior network element.

It has to be noted that the above apparatus can be provided in a target network element during the handover process, and as to the LTE system, the target network element is a target base station, and as to UMTS, the target network element is a target radio network controller RNC.

After the feedback module **6** has returned a response message with the CSG ID of the target network element to a superior network element of the target network element, the superior network element receives the response message with the CSG ID. The superior network element sends a handover command/redirection command/handover preparation failure message/redirection preparation failure message to a source handover network element. Preferably, it carries the CSG ID, and the source handover network element receives the handover/redirection command/handover preparation failure message/redirection preparation failure message carrying the CSG ID and updates the information of the target network element (i.e. the information of the target cell) according to the CSG ID, which response message optionally includes the default access identity information of the terminal of the target network element.

When the target network element is a target base station, the superior network element includes one of: an MME and a home nodeB gateway; and when the target network element is a target RNC, the superior network element includes one of: a CN and a home nodeB gateway

That is to say, if the target base station is connected to the MME, then the superior network element means the MME; if the target base station is connected to the CN, then it means the CN; and if the target base station is connected to the MME or CN through a home nodeB gateway, then the superior network element means home nodeB gateway and the home nodeB gateway forwards the response message to the MME or CN.

When the superior network element is a home nodeB gateway, the home nodeB gateway receives the response message carrying the CSG ID and the home nodeB gateway sends the response message to the MME or CN.

The MME or CN receives the response message and sends to a source handover network element a handover command/redirection command/handover preparation failure message/redirection preparation failure message carrying the CSG ID, wherein the MME or CN can receive a response message from the home nodeB gateway and can also receive a response message from the home nodeB.

In this case, as to the LTE system, the handover message is a handover request message and the response message is a handover request response message/handover preparation failure message; and as to the UMTS system, the handover message is a redirection request message and the response message is a redirection request response message/redirection preparation failure message.

Preferably, the MME receives the handover request response message carrying the CSG ID, determines the real access identity of the UE corresponding to the handover message according to the CSG ID, and informs the target base station of the determination result.

Preferably, the CN receives the redirection request response message carrying the CSG ID, determines the real access identity of the UE according to the CSG ID, and informs the target RNC of the determination result.

Furthermore, the real identity information is the information that the terminal has a member identity or a non-member identity after the MME or CN makes the determination according to the CSG ID in the handover request response message/redirection request response message.

Furthermore, that the target side is informed of the real access identity information means that: the informing is performed in the situation that the default identity information is different from the real identity information. If the default identity information is non-member identity information, the real identity information means the member identity information; and if the default identity information is the member identity information, then the real identity information means non-member identity information.

In summary, by virtue of the above embodiments of the present invention, after a target network element has received a handover message, if the verification on the CSG ID in this message is not passed, then a response message with the CSG ID of the target network element is returned to the superior network element of the target network element, which solves the problem in relevant art that the handover is failed because the verification that the target network element performs on the CSG of the non-subscribed users is not passed in the Hybrid access mode, thus improving handover efficiency and system performance.

Apparently, those skilled in the art should understand that each module or step in the above present invention can be implemented through general-purpose computing devices and they can be put together on single computing devices or distributed on a network consisted of a plurality of computing devices. Optionally, they can be implemented using computing device executable program code. Therefore, they can be executed by computing devices by storing them in a storage device, and in certain cases the shown or described steps can be executed in an order different from this, or they can be made into each integrated circuit module respectively or they can be implemented by making a plurality of modules or steps in them into single integrated modules respectively. Thus, the present invention is not limited to the combination of any specific hardware and software.

## Claims

1. A method for processing the handover to a close subscriber group cell, the method comprising:
a target network element receiving a handover message (S502, S604, S704, S804, S904); and
the target network element performing verification on a close subscriber group identity, CSG ID, carried in the handover message (S605, S705, S805, S905), and if the verification is not passed, then the target network element returning a response message carrying a CSG ID of the target network element to a superior network element of the target network element (S504, S606, S607, S706, S707, S806, S807, S906, S907);
wherein when the target network element has Hybrid access mode and if the verification is not passed, the method further comprises:
the target network element transferring the default access identity information of the target network element to the superior network element.

2. The method according to claim 1, wherein after the target network element returning a response message carrying the CSG ID of the target network element to the superior network element of the target network element (S504, S606, S607, S706, S707, S806, S807, S906, S907), the method further comprises:
the superior network element receiving the response message carrying the CSG ID (S504, S606, S607, S706, S707, S806, S807, S906, S907), and the superior network element sending to a source handover network element a handover command (S608)/redirection command (S708)/handover preparation failure message (S908)/redirection preparation failure message (S808), which carries the CSG ID therein.

3. The method according to claim 2, wherein after the superior network element sending to the source handover network element the handover command (S608)/redirection command (S708)/handover preparation failure message (S908)/redirection preparation failure message (S808), the method further comprises:
the source handover network element receiving the handover command (S608)/redirection command (S708)/handover preparation failure message (S908)/redirection preparation failure message (S808) carrying the CSG ID, and updating information of the target network element according to the CSG ID.

4. The method according to any one of claims 1 to 3, wherein as to the long term evolution, LTE, system, the target network element is a target base station or a target home nodeB gateway, and as to the universal mobile telecommunications system, UMTS, the target network element is a target radio network controller, RNC, or a target home nodeB gateway.

5. The method according to claim 4, wherein when the target network element is the target base station, the superior network element includes one of: a mobile management entity, MME, and a home nodeB gateway; and when the target network element is the target RNC, the superior network element includes one of: a core network, CN, and a home nodeB gateway.

6. The method according to claim 5, wherein when the superior network element is a home nodeB gateway, after the superior network element receiving the response message carrying the CSG ID (S606, S706, S806, S906), the method further comprises:
the home nodeB gateway sending the response message to the MME or the CN ($607, $707, $807, $907).

7. The method according to claim 1 or 5, wherein as to the LTE system, the handover message is a handover request message and the response message is a handover request response message/handover preparation failure message; and as to the UMTS system, the handover message is a redirection request message and the response message is a redirection request response message/redirection preparation failure message.

8. The method according to claim 7, wherein after the target network element returning to the superior network element of the target network element a response message carrying the CSG ID of the target network element, the method further comprises one of:
the MME receiving the handover request response message carrying the CSG ID, determining the real access identity of the user equipment corresponding to the handover message according to the CSG ID, and informing the target base station of the determination result; and
the CN receiving the redirection request response message carrying the CSG ID, determining the real access identity of the user equipment according to the CSG ID, and informing the target RNC of the determination result.

9. A method for processing the handover to a close subscriber group cell, the method comprising:
an MME receiving a handover demand message (S1002); and
the MME performing verification on a CSG ID carried in the handover demand message, and if the verification is not passed, then the MME returning a CSG ID of a target network element to a source handover network element (S1003, S1006);
wherein when the target network element has Hybrid access mode, in the situation that the verification is not passed, the determination of the terminal identity is performed according to a CSG ID saved at the MME and the identity information after the determination is informed to the target base station (S1004).

10. An apparatus for processing the handover to a close subscriber group cell, the apparatus comprising:
a receiving module, configured for receiving a handover message;
a verifying module, configured for performing verification on a CSG ID carried in the handover message; and
a feedback module, configured for returning to a superior network element of the target network element a response message carrying the CSG ID of the target network element in the situation that the verification result of the verifying module is negative;
wherein when the target network element has Hybrid access mode and if the verification result of the verifying module is negative, the feedback module transferring the default access identity information of the target network element to the superior network element.

11. The apparatus according to claim 10, further comprising:
a processing module, configured for allowing the user equipment corresponding to the handover message to access in an identity of a non-member or an identity of a member in the situation that the verification result of the verifying module is negative.

## Patentansprüche

1. Verfahren zum Verarbeiten der Übergabe an eine Geschlossene-Teilnehmer-Gruppenzelle, wobei das Verfahren Folgendes umfasst:
ein Zielnetzelement empfängt eine Übergabenachricht (S502, S604, S704, S804, S904); und
das Zielnetzelement führt Verifikation an einer in der Übergabenachricht (S605, S705, S805, S905) geführten Geschlossene-Teilnehmergruppen-Identität CSG ID aus, und wenn die Verifikation nicht bestanden wird, gibt das Zielnetzelement eine Antwortnachricht, die eine CSG ID des Zielnetzelements führt, an ein übergeordnetes Netzelement des Zielnetzelements (S504, S606, S607, S706, S707, S806, S807, S906, S907) zurück; wobei, wenn das Zielnetzelement über Hybrid-Zugangsmodus verfügt und wenn die Verifikation nicht bestanden wird, das Verfahren ferner Folgendes umfasst:
das Zielnetzelement übermittelt die Vorgabe-Zugangsidentitätsinformationen des Zielnetzelements zu dem übergeordneten Netzelement.

2. Verfahren nach Anspruch 1, wobei, nachdem das Zielnetzelement eine Antwortnachricht, die die CSG ID des Zielnetzelements führt, an das übergeordnete Netzelement des Zielnetzelements (S504, S606, S607, S706, S707, S806, S807, S906, S907) zurückgibt, das Verfahren ferner Folgendes umfasst:
das übergeordnete Netzelement empfängt die Antwortnachricht, die die CSG ID führt (S504, S606, S607, S706, S707, S806, S807, S906, S907), und das übergeordnete Netzelement sendet einem Quellen-Übergabenetzelement eine Nachricht eines Übergabebefehls (S608)/Umleitungsbefehls (S708)/des Übergabevorbereitungsfehlschlagens (S908)/des Umleitungsvorbereitungsfehlschlagens (S808), die darin die CSG ID führt.

3. Verfahren nach Anspruch 2, wobei das Verfahren, nachdem das übergeordnete Netzelement dem Quellen-Übergabenetzelement die Nachricht des Übergabebefehls (S608)/Umleitungsbefehls (S708)/des Übergabevorbereitungsfehlschlagens (S908)/des Umleitungsvorbereitungsfehlschlagens (S808) sendet, ferner Folgendes umfasst:
das Quellen-Übergabenetzelement empfängt die Nachricht des Übergabebefehls (S608)/Umleitungsbefehls (S708)/des Übergabevorbereitungsfehlschlagens (S908)/des Umleitungsvorbereitungsfehlschlagens (S808), die die CSG ID führt, und aktualisiert Informationen des Zielnetzelements gemäß der CSG ID.

4. Verfahren nach einem der Ansprüche 1 bis 3, wobei hinsichtlich des Long-Term-Evolution- bzw. LTE-Systems das Zielnetzelement eine Zielbasisstation oder ein Ziel-Heimat-NodeB-Gateway ist und hinsichtlich des Universal Mobile Telecommunications System UMTS das Zielnetzelement eine Ziel-Funknetzsteuerung RNC oder ein Ziel-Heimat-NodeB-Gateway ist.

5. Verfahren nach Anspruch 4, wobei, wenn das Zielnetzelement die Zielbasisstation ist, das übergeordnete Netzelement eines der Folgendes umfasst: eine Mobile Management Entity MME und ein Heimat-NodeB-Gateway; und wenn das Zielnetzelement die Ziel-RNC ist, das übergeordnete Netzelement ein Kernnetz CN oder ein Heimat-NodeB-Gateway umfasst.

6. Verfahren nach Anspruch 5, wobei, wenn das übergeordnete Netzelement ein Heimat-NodeB-Gateway ist, das Verfahren, nachdem das übergeordnete Netzelement die Antwortnachricht empfängt, die die CSG ID führt (S606, S706, S806, S906) ferner Folgendes umfasst:
das Heimat-NodeB-Gateway sendet die Antwortnachricht zu der MME oder dem CN ($607, $707, $807, $907).

7. Verfahren nach Anspruch 1 oder 5, wobei hinsichtlich des LTE-Systems die Übergabenachricht eine Übergabeanforderungsnachricht ist und die Antwortnachricht eine Übergabeanforderungs-Antwortnachricht/Übergabevorbereitungs-Fehlschlagsnachricht ist; und hinsichtlich des UMTS-Systems die Übergabenachricht eine Umleitungsanforderungsnachricht ist und die Antwortnachricht eine Umleitungsanforderungs-Antwortnachricht/Umleitungsvorbereitungs-Fehlschlagsnachricht ist.

8. Verfahren nach Anspruch 7, wobei das Verfahren, nachdem das Zielnetzelement eine Antwortnachricht, die die CSG ID des Zielnetzelements führt, an das übergeordnete Netzelement des Zielnetzelements zurückgibt, ferner Folgendes umfasst:
die MME empfängt die Übergabeanforderungs-Antwortnachricht, die die CSG ID führt, bestimmt die echte Zugangsidentität des Benutzergeräts gemäß der Übergabenachricht gemäß der CSG ID und informiert die Zielbasisstation über das Bestimmungsergebnis; oder
das CN empfängt die Umleitungsanforderungs-Antwortnachricht, die die CSG ID führt, bestimmt die echte Zugangsidentität des Benutzergeräts gemäß der CSG ID und informiert die Ziel-RNC über das Bestimmungsergebnis.

9. Verfahren zum Verarbeiten der Übergabe an eine Geschlossene-Teilnehmer-Gruppenzelle, wobei das Verfahren Folgendes umfasst:
eine MME empfängt eine Übergabebedarfsnachricht (S1002); und
die MME führt Verifikation an einer in der Übergabebedarfsnachricht geführten CSG ID aus, und wenn die Verifikation nicht bestanden wird, gibt die MME eine CSG ID eines Zielnetzelements an ein Quellen-Übergabenetzelement zurück (S1003, S1006);
wobei, wenn das Zielnetzelement über Hybrid-Zugangsmodus verfügt, in der Situation, dass die Verifikation nicht bestanden wird, die Bestimmung der Endgeräteidentität gemäß einer in der MME hinterlegten CSG ID durchgeführt werden kann, und die Identitätsinformationen nach der Bestimmung der Zielbasisstation mitgeteilt werden (S1004).

10. Vorrichtung zur Verarbeitung der Übergabe an eine Geschlossene-Teilnehmer-Gruppenzelle, wobei die Vorrichtung Folgendes umfasst:
ein Empfangsmodul, ausgelegt zum Empfangen einer Übergabenachricht;
ein Verifikationsmodul, ausgelegt zum Durchführen einer Verifikation an einer in der Übergabenachricht geführten CSG ID; und
ein Rückmeldemodul, ausgelegt zum Zurückgeben einer Antwortnachricht, die die CSG ID des Zielnetzelements führt, an ein übergeordnetes Netzelement des Zielnetzelements in der Situation, dass das Verifikationsergebnis des Verifikationsmoduls negativ ist;
wobei, wenn das Zielnetzelement über Hybrid-Zugangsmodus verfügt und wenn das Verifikationsergebnis des Verifikationsmoduls negativ ist, das Rückmeldemodul die Vorgabe-Zugangsidentitätsinformationen des Zielnetzelements zu dem übergeordneten Netzelement übermittelt.

11. Vorrichtung nach Anspruch 10, ferner umfassend:
ein Verarbeitungsmodul, das dafür ausgelegt ist, dem der Übergabenachricht entsprechenden Benutzergerät Zugang in einer Identität eines Nicht-Mitglieds oder einer Identität eines Mitglieds zu erlauben, in der Situation, dass das Verifikationsergebnis des Verifikationsmoduls negativ ist.

## Revendications

1. Procédé de traitement du transfert cellulaire à une cellule de groupe fermé d'abonnés, le procédé comprenant les étapes consistant à :
recevoir, par un élément de réseau cible, un message de transfert cellulaire (S502, S604, S704, S804, S904) ; et
procéder, par l'élément de réseau cible, à une vérification sur une identité de groupe fermé d'abonnés, dite CSG ID, contenue dans le message de transfert cellulaire (S605, S705, S805, S905) et, en cas d'échec de la vérification, renvoyer alors, par l'élément de réseau cible, un message de réponse contenant une CSG ID de l'élément de réseau cible à un élément de réseau supérieur de l'élément de réseau cible (S504, S606, S607, S706, S707, S806, S807, S906, S907) ;
le procédé comprenant en outre, lorsque l'élément de réseau cible dispose d'un mode d'accès hybride et en cas d'échec de la vérification, l'étape consistant à :
transférer, par l'élément de réseau cible, les informations d'identité d'accès par défaut de l'élément de réseau cible à l'élément de réseau supérieur.

2. Procédé selon la revendication 1, comprenant en outre, suite à l'étape consistant à renvoyer, par l'élément de réseau cible, un message de réponse contenant la CSG ID de l'élément de réseau cible à l'élément de réseau supérieur de l'élément de réseau cible (S504, S606, S607, S706, S707, S806, S807, S906, S907), les étapes consistant à :
recevoir, par l'élément de réseau supérieur, le message de réponse contenant la CSG ID (S504, S606, S607, S706, S707, S806, S807, S906, S907), et envoyer, par l'élément de réseau supérieur, à un élément de réseau de transfert cellulaire d'origine une commande de transfert cellulaire (S608) / une commande de réacheminement (S708) / un message d'échec de préparation de transfert cellulaire (S908) / un message d'échec de préparation de réacheminement (S808), contenant la CSG ID.

3. Procédé selon la revendication 2, comprenant en outre, suite à l'étape consistant à envoyer, par l'élément de réseau supérieur, à l'élément de réseau de transfert cellulaire d'origine la commande de transfert cellulaire (S608) / la commande de réacheminement (S708) / le message d'échec de préparation de transfert cellulaire (S908) / le message d'échec de préparation de réacheminement (S808), les étapes consistant à :
recevoir, par l'élément de réseau de transfert cellulaire d'origine, la commande de transfert cellulaire (S608) / la commande de réacheminement (S708) / le message d'échec de préparation de transfert cellulaire (S908) / le message d'échec de préparation de réacheminement (S808) contenant la CSG ID, et mettre à jour, par l'élément de réseau de transfert cellulaire d'origine, des informations de l'élément de réseau cible conformément à la CSG ID.

4. Procédé selon l'une quelconque des revendications 1 à 3, dans lequel, dans le contexte du système d'évolution à long terme, dite LTE, l'élément de réseau cible est une station de base cible ou une passerelle de NodeB domestique cible et, dans le contexte du système universel de télécommunication mobile, dit UMTS, l'élément de réseau cible est un contrôleur de réseau radio, dit RNC, cible ou une passerelle de NodeB domestique cible.

5. Procédé selon la revendication 4, dans lequel, lorsque l'élément de réseau cible est la station de base cible, l'élément de réseau supérieur comporte : une entité de gestion de la mobilité, dite MME, ou bien une passerelle de NodeB domestique ; et, lorsque l'élément de réseau cible est le RNC cible, l'élément de réseau supérieur comporte : un réseau coeur, dit CN, ou bien une passerelle de NodeB domestique.

6. Procédé selon la revendication 5, comprenant en outre, lorsque l'élément de réseau supérieur est une passerelle de NodeB domestique, suite à l'étape consistant à recevoir, par l'élément de réseau supérieur, le message de réponse contenant la CSG ID (S606, S706, S806, S906), l'étape consistant à :
envoyer, par la passerelle de NodeB domestique, le message de réponse à la MME ou au CN ($607, $707, $807, $907).

7. Procédé selon la revendication 1 ou 5, dans lequel, dans le contexte du système LTE, le message de transfert cellulaire est un message de demande de transfert cellulaire et le message de réponse est un message de réponse à une demande de transfert cellulaire / un message d'échec de préparation de transfert cellulaire ; et, dans le contexte du système UMTS, le message de transfert cellulaire est un message de demande de réacheminement et le message de réponse est un message de réponse à une demande de réacheminement / un message d'échec de préparation de réacheminement.

8. Procédé selon la revendication 7, comprenant en outre, suite à l'étape consistant à renvoyer, par l'élément de réseau cible, à l'élément de réseau supérieur de l'élément de réseau cible un message de réponse contenant la CSG ID de l'élément de réseau cible, l'un des deux groupes suivants d'étapes consistant à :
recevoir, par la MME, le message de réponse à une demande de transfert cellulaire contenant la CSG ID, déterminer, par la MME, l'identité d'accès réelle de l'équipement utilisateur correspondant au message de transfert cellulaire conformément à la CSG ID, et informer, par la MME, la station de base cible du résultat de la détermination ; et
recevoir, par le CN, le message de réponse à une demande de réacheminement contenant la CSG ID, déterminer, par le CN, l'identité d'accès réelle de l'équipement utilisateur conformément à la CSG ID, et informer, par le CN, le RNC cible du résultat de la détermination.

9. Procédé de traitement du transfert cellulaire à une cellule de groupe fermé d'abonnés, le procédé comprenant les étapes consistant à :
recevoir, par une MME, un message de demande de transfert cellulaire (S1002) ; et
procéder, par la MME, à une vérification sur une CSG ID contenue dans le message de demande de transfert cellulaire et, en cas d'échec de la vérification, renvoyer alors, par la MME, une CSG ID d'un élément de réseau cible à un élément de réseau de transfert cellulaire d'origine (S1003, S1006) ;
dans lequel, lorsque l'élément de réseau cible dispose d'un mode d'accès hybride, en cas d'échec de la vérification, la détermination de l'identité du terminal se fait en fonction d'une CSG ID mémorisée à la MME et des informations d'identité après que la station de base cible a été informée de la détermination (S1004).

10. Appareil de traitement du transfert cellulaire à une cellule de groupe fermé d'abonnés, l'appareil comprenant :
un module de réception, configuré pour recevoir un message de transfert cellulaire ;
un module de vérification, configuré pour procéder à une vérification sur une CSG ID contenue dans le message de transfert cellulaire ; et
un module de retour d'information, configuré pour renvoyer à un élément de réseau supérieur de l'élément de réseau cible un message de réponse contenant la CSG ID de l'élément de réseau cible en cas de résultat de vérification négatif du module de vérification ;
dans lequel, lorsque l'élément de réseau cible dispose d'un mode d'accès hybride et en cas de résultat de vérification négatif du module de vérification, le module de retour d'information transfère les informations d'identité d'accès par défaut de l'élément de réseau cible à l'élément de réseau supérieur.

11. Appareil selon la revendication 10, comprenant en outre :
un module de traitement, configuré pour permettre l'accès à l'équipement utilisateur correspondant au message de transfert cellulaire sous une identité d'un non-membre ou une identité d'un membre en cas de résultat de vérification négatif du module de vérification.
